# EUROPEAN PATENT SPECIFICATION

(11) **EP 4 335 366 B1**
(45) Date of publication and mention of the grant of the patent: **23.04.2025**
(21) Application number: 23193656.8
(22) Date of filing: 28.08.2023
(51) Int. Cl.: A61B 5/11, A61B 5/00, A63B 69/00, G01C 22/00

(54) **RUNNING ANALYSIS SYSTEM AND RUNNING ANALYSIS METHOD**
LAUFANALYSESYSTEM UND LAUFANALYSEVERFAHREN
SYSTÈME D'ANALYSE DE COURSE ET PROCÉDÉ D'ANALYSE DE COURSE

(30) Priority: 07.09.2022 JP 2022142548
(43) Date of publication of application: 13.03.2024
(73) Proprietor: ASICS Corporation, Kobe-shi, Hyogo 650-8555 (JP)
(72) Inventor: KO, Yuki, Hyogo, 6508555 (JP); HIRAKAWA, Nao, Hyogo, 6508555 (JP); NOMURA, Yasuhiro, Hyogo, 6508555 (JP); NAKAYAMA, Kazunaga, Hyogo, 6508555 (JP)
(74) Representative: TBK

(56) References cited:
- WO-A1-2022/137498

## Description

### BACKGROUND

### 1. Technical Field

The present disclosure relates to a running analysis system. In particular, the present disclosure relates to a system for analyzing running results.

### 2. Description of the Related Art

Prior art which is related to this field is disclosed in WO2022/137498A1 showing exercise motion analysis system, exercise motion analysis method, and exercise motion analysis program.
In recent years, with the increasing health consciousness of people, the running population has been increasing. Especially in recent years, with widespread use of smartphones and watches with built-in Global Positioning System (GPS) modules, anyone can easily record running exercise logs (hereinafter, also referred to as "running logs"). The use of such running logs motivates people to continue running and make it a habit, which is boosting the popularity of running.

With the increase in the running population, the number of marathon races and the number of participants therein have also been increasing. By recording running logs during a race, runners can look back on their own running results after the race. As techniques for displaying such running data, running data display methods and exercise support devices are known (see Patent Literatures 1 and 2, for example).
Patent Literature 1: Japanese Patent No. 7031234
Patent Literature 2: Japanese Patent No. 5984002

However, in the prior art, even if various information regarding the amount of running, such as the running time and running distance, and the running form in a race can be obtained, it has not been always easy to find out which information in particular to focus on, in order to improve one's own level. Therefore, users who could not fully utilize the various information obtained have been less likely to be motivated to look back on their race results based on the information.

### SUMMARY

The present disclosure has been made in view of such a situation, and a purpose thereof is to provide a technology for facilitating running analysis based on information regarding running.

The present disclosure provides a running analysis system according to claim 1.

The present disclosure provides a running analysis method according to claim 11.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
FIG. 1 illustrates a configuration of a running analysis system;
FIG. 2 is a functional block diagram that shows each configuration in the running analysis system;
FIG. 3 is a flowchart that shows the process of processing performed in the running analysis system;
FIG. 4 shows an example in which index measurement values are classified using a first classification method;
FIGS. 5 show preparation processing when index measurement values are classified using a second classification method;
FIGS. 6 show processing for classifying index measurement values using the second classification method;
FIG. 7 shows horizontal bar graphs that each show proportion of classifications for each motion analysis index;
FIG. 8 shows a state where the index measurement values divided in the horizontal bar graphs of FIG. 7 are further evaluated based on a different criterion;
FIGS. 9 each show an example in which the output targets displayed are narrowed down to index measurement values detected as attention values;
FIG. 10 shows an example of a motion analysis index that has the longest section as a section in which a significantly bad trend continues;
FIG. 11 illustrates a screen example for displaying race results;
FIG. 12 illustrates a screen example for displaying race evaluations; and
FIG. 13 illustrates a screen example for displaying detailed explanation regarding an evaluation point.

### DETAILED DESCRIPTION OF THE INVENTION

The disclosure will now be described by reference to the preferred embodiments. This does not intend to limit the scope of the present disclosure, but to exemplify the disclosure.

In the following, the present disclosure will be described based on a preferred embodiment with reference to each drawing. In the embodiment and modifications, like reference characters denote like or corresponding constituting elements, and the repetitive description will be omitted as appropriate.

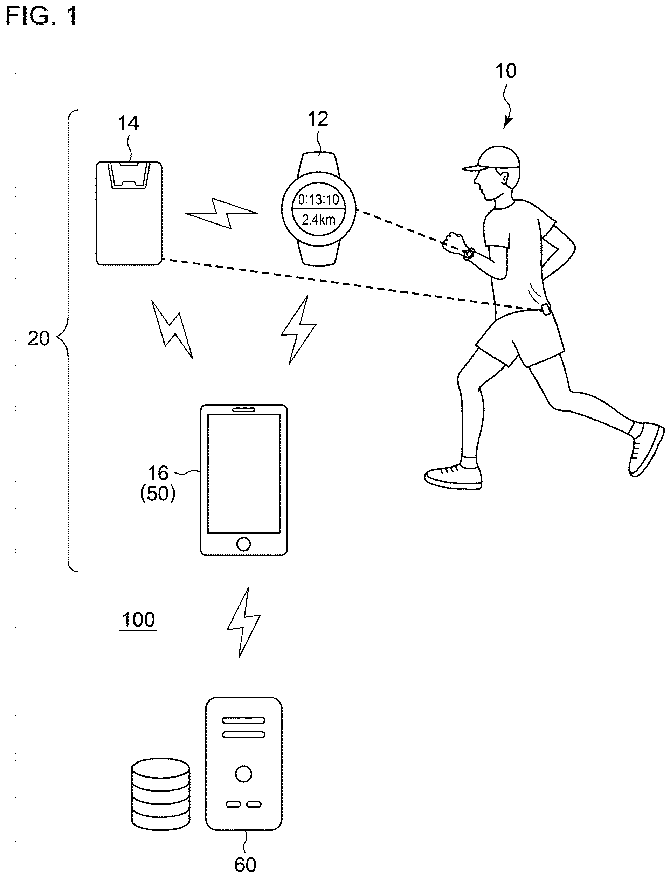

FIG. 1 shows a configuration of a running analysis system 100. The running analysis system 100 includes a wristwatch-type device 12, a waist-mounted device 14, and an information terminal-type device 16, which can be worn by a user 10 as a runner in running exercise, and a running analysis server 60. The wristwatch-type device 12, waist-mounted device 14, and information terminal-type device 16 are also collectively referred to as measurement devices 20. The wristwatch-type device 12 is a sports watch or a smart watch that can measure position information, motion information, and the like. The waist-mounted device 14 is a motion sensor that can be attached to the vicinity of the waist of the user 10 to measure position information and motion information. The information terminal-type device 16 is a portable information terminal, such as a smartphone, that can measure position information and motion information while held in a pocket or the like by the user 10. The user 10 performs running while wearing one or more measurement devices 20 in a race or the like and acquires position information and motion information. When the user 10 wear multiple measurement devices 20, each device may be used appropriately depending on the information to be acquired, such as acquiring the position information using the wristwatch-type device 12, and acquiring the motion information using the waist-mounted device 14.

A measurement device 20 is not limited to a device such as the wristwatch-type device 12, waist-mounted device 14, or information terminal-type device 16 and may also be a device attached on or in a runner's shoe. Also, a measurement device 20 may be a belt-type device that can be worn around the chest, a wrist, the waist, or an arm of the runner to acquire the position information and motion information. Further, various other wearable devices including smart glasses may be used as the measurement devices 20. Also, a camera may be installed near each point of passage along the running course to capture images of the runner. Accordingly, skeletal information, such as joint positions of the runner, may be acquired by image recognition, and motion information, such as the cadence and stride length, that can be calculated from such information may also be acquired. Instead of installing a camera near each point of passage, a drone may be used to capture images of the runner.

The user 10 runs while wearing at least one or all of the wristwatch-type device 12, waist-mounted device 14, and information terminal-type device 16 as the measurement devices 20. Each measurement device 20 synchronizes information via communication with the running analysis server 60. However, the communication means for the wristwatch-type device 12 and the waist-mounted device 14 among the measurement devices 20 is short-range wireless communication; therefore, instead of communicating directly with the running analysis server 60, the devices synchronize information with the information terminal-type device 16 (which also functions as an "information terminal 50" detailed later), and the information terminal 50 then synchronizes information with the running analysis server 60. Thus, since the wristwatch-type device 12 and the waist-mounted device 14 transmit information to the running analysis server 60 via synchronization to the information terminal 50, it is premised that the information terminal 50 is possessed. However, the information terminal 50 need not necessarily be worn during running, and it is sufficient if the synchronization with the information terminal 50 can be performed after the exercise. As a modification, after the waist-mounted device 14 synchronizes information with the wristwatch-type device 12 via near-field wireless communication, the wristwatch-type device 12 may further synchronize the information with the information terminal-type device 16 (information terminal 50) via near-field wireless communication.

The user 10 performs running while wearing a measurement device 20, mainly in a running race such as a marathon race. However, the measurement is not limited to during a race and may also be conducted during a long-distance practice run, assuming a race, or during a shorter distance run. The user 10 starts measurement and running log recording by operating a button or the like of the measurement device 20 at the start of running. During the running exercise, the measurement device 20 measures, as running time, the elapsed time from the start of recording with a timer and also records position information for each date and time at predetermined time intervals. The measurement device 20 also measures, with a built-in motion sensor, motion information such as the cadence (the number of steps per unit time), rotational and translational motion of the pelvis, or impact value. The measurement device 20 also measures the heart rate of the user 10 with a built-in optical heart rate monitor.

After the completion of the running and the running log recording, the measurement device 20 transmits, to the running analysis server 60, information such as the running time, position information, motion information, and heart rate, as the running log. Also, the measurement device 20 may calculate information such as the running time, running distance, running speed, cadence, and stride length, based on the time information and position information and may transmit the running log including such calculated information to the running analysis server 60.

The running analysis server 60 is a server computer that is connected to the Internet and transmits and receives data to and from the information terminals 50 of multiple users 10. The running analysis server 60 acquires, as running log data of a user 10 received from the corresponding information terminal 50, information such as the time information, position information, motion information, and heart rate, together with identification information and attribute information of the user 10, and accumulates the running log data together with measurement values and evaluation values of various types of running analysis indices calculated from the information. In response to a request from an information terminal 50, the running analysis server 60 transmits the accumulated running log data, measurement values, evaluation values, and the like to the information terminal 50.

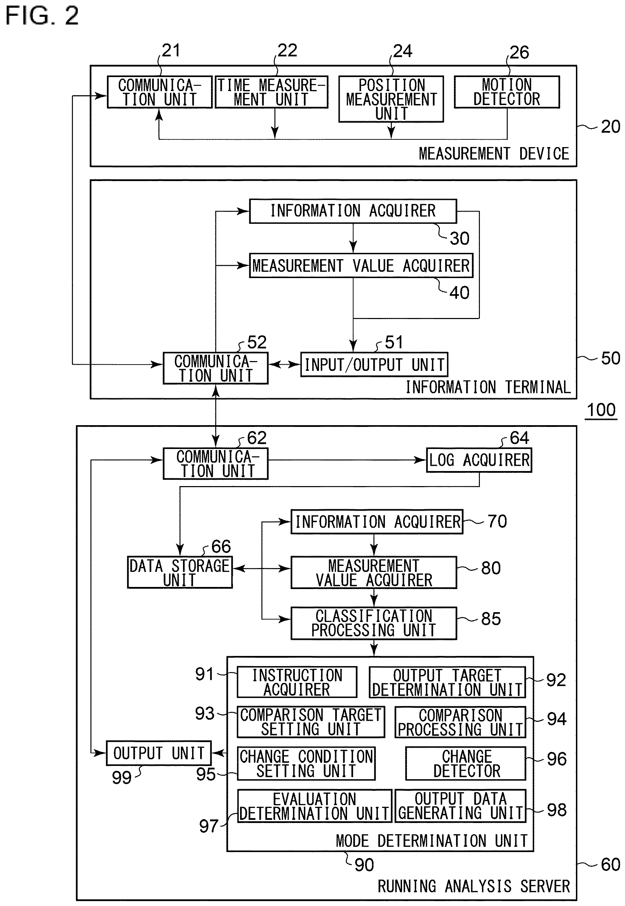

FIG. 2 is a functional block diagram that shows each configuration in the running analysis system 100. The running analysis system 100 in the present embodiment is constituted by a measurement device 20, an information terminal 50, and the running analysis server 60. The running analysis system 100 may be implemented by various hardware configurations and software configurations. For example, the running analysis system 100 may be constituted only by the information terminal 50, may be constituted by a combination of the information terminal 50 and the measurement device 20, or may be constituted by a combination of the information terminal 50 and the running analysis server 60. Also, the running analysis system 100 may be constituted by a combination of the information terminal 50, the measurement device 20, and the running analysis server 60, may be constituted by a combination of the measurement device 20 and the running analysis server 60, or may be constituted only by the running analysis server 60.

For example, on the premise that the running state is detected and recorded as the running log using a variety of general-purpose devices as the measurement device 20, the running analysis system 100 may be constituted by a combination of the information terminal 50 and the running analysis server 60 or only by the running analysis server 60 or may be implemented as a stand-alone device that includes all the software configurations included in the information terminal 50 and the running analysis server 60 shown in FIG. 2. Therefore, it is sufficient if the running analysis system 100 includes, regardless of its hardware configuration, at least the software configurations of the information terminal 50 and the running analysis server 60 shown in FIG. 2.

With regard to each of the measurement device 20, information terminal 50, and running analysis server 60, FIG. 2 shows functional blocks implemented by coordination of various hardware configurations and software configurations. Therefore, it will be understood by those skilled in the art that these functional blocks may be implemented in a variety of forms by hardware only, software only, or a combination thereof. The measurement device 20 is constituted by a combination of hardware such as a microprocessor, display device, memory, communication module, positioning module, motion sensor, and optical heart rate monitor. The information terminal 50 is constituted by a combination of hardware such as a microprocessor, touch panel, memory, communication module, positioning module, and motion sensor. The running analysis server 60 is constituted by a combination of hardware such as a microprocessor, memory, display, and communication module. In the following, the functions of each of the measurement device 20, information terminal 50, and running analysis server 60 will be described.

The measurement device 20 is, for example, the waist-mounted device 14. The measurement device 20 includes a communication unit 21, a time measurement unit 22, a position measurement unit 24, and a motion detector 26. The time measurement unit 22 measures the running start time, i.e., the running time from the measurement start time, with counting by a timer. The position measurement unit 24 measures the current position based on position information received by a GPS module from a satellite positioning system. The motion detector 26 detects, with a motion sensor, the cadence, rotational and translational motion of the pelvis, impact value, or the like of the user 10.

As the measurement device 20, the wristwatch-type device 12 or the information terminal-type device 16 may also be used. When the wristwatch-type device 12 is used as the measurement device 20, the motion detector 26 of the wristwatch-type device 12 detects the cadence and the like of the user 10 with a motion sensor, and the heart rate and the like with an optical heart rate monitor. When the information terminal-type device 16 is used as the measurement device 20, the motion detector 26 of the information terminal-type device 16 detects the cadence and the like of the user 10 with a motion sensor. The information terminal 50 may serve dually as the information terminal-type device 16 as the measurement device 20, and, in that case, a single mobile terminal such as a smartphone may have all the functions of both the measurement device 20 and the information terminal 50, for example. When the information terminal 50 is not used as the measurement device 20, the information terminal 50 may be not limited to a smartphone and may also be a tablet terminal or a personal computer owned by the user 10.

The information terminal 50 includes an information acquirer 30, a measurement value acquirer 40, an input/output unit 51, and a communication unit 52. The information acquirer 30 receives, via the communication unit 52, the position information and motion information of the user 10, who is a runner in a race, measured at each point of passage in the run by the measurement device 20 worn by the user 10. The "point of passage" as used herein means a point of passage in terms of time or a point of passage in terms of distance in running in a race or the like, and, at each point of passage in terms of time or distance, the position information and motion information is recorded in the measurement device 20. The position information includes information such as the date and time of measurement, position coordinates, and elevation. The motion information includes information indicating the cadence, rotational and translational motion of the pelvis, impact value, or the like. The information acquirer 30 may synchronize information with the measurement device 20 during running to acquire the position information and motion information as information of the running state in the middle of the run through the measurement device 20 or may acquire, from the measurement device 20, the position information and motion information of the entire run collectively after the completion of the running.

Based on the information acquired by the information acquirer 30, the measurement value acquirer 40 acquires measurement values of multiple types of motion analysis indices indicating a running motion state of a user (hereinafter, a measurement value of a motion analysis index indicating a running motion state will be referred to as an "index measurement value") for each predetermined unit measurement section, based on the pieces of position information and motion information that are chronologically consecutive. The "predetermined unit measurement section" refers to a measurement interval in units of a predetermined elapsed time, such as every 1 second or every 1 minute, or a measurement interval in units of a predetermined elapsed distance, such as every 100 m or every 1 km.

The measurement value acquirer 40 calculates index measurement values of multiple types of motion analysis indices, such as the lap pace, lap time, running time, running speed, cadence, stride length, stride length (%height), pelvic backward lean, vertical motion, vertical motion (%height), body drop, pelvic drop, pelvic elevation, pelvic rotation, pelvic rotation timing, horizontal impact force, kicking phase duration, ground contact time, ground contact time rate, landing impact, kicking acceleration, amount of braking, stiffness, and stiffness weight ratio. The measurement value acquirer 40 records the index measurement values that are chronologically consecutive throughout the entire process from the start to the end of the running, as time-series data.

The input/output unit 51 transmits, as the running log, the position information and motion information acquired by the measurement device 20 and the index measurement values acquired by the measurement value acquirer 40, together with the attribute information of the user 10, to the running analysis server 60 via the communication unit 52. The input/output unit 51 displays, on a screen, the position information and motion information acquired by the measurement device 20 and the index measurement values acquired by the measurement value acquirer 40, and also information received from the running analysis server 60. The input/output unit 51 accepts operation input by the user 10. The input/output unit 51 may be constituted by a touch panel in terms of hardware.

In the present embodiment, an example has been described in which the measurement value acquirer 40 acquires multiple types of index measurement values. However, the function of the measurement value acquirer 40 may be included in the running analysis server 60, and the information terminal 50 may be set not to calculate the index measurement values. In the following description of the running analysis server 60, an example will be described in which the running analysis server 60 includes a measurement value acquirer 80 that corresponds to the function of the measurement value acquirer 40.

The running analysis server 60 includes a communication unit 62, a log acquirer 64, an information acquirer 70, a measurement value acquirer 80, a classification processing unit 85, a mode determination unit 90, a data storage unit 66, and an output unit 99.

The log acquirer 64 acquires a running log via the communication unit 62 and stores the running log in the data storage unit 66. The information acquirer 70 is a function corresponding to the information acquirer 30 of the measurement device 20. More specifically, the information acquirer 70 acquires, from the running logs stored in the data storage unit 66, the position information and motion information of the user 10, who is a runner in a race, measured at each point of passage in the run by the measurement device 20 worn by the user 10.

The measurement value acquirer 80 is a function corresponding to the measurement value acquirer 40 of the information terminal 50. More specifically, based on the information acquired by the information acquirer 70, the measurement value acquirer 80 acquires index measurement values of multiple types of motion analysis indices indicating a running motion state of a user for each predetermined unit measurement section, based on the pieces of position information and motion information that are chronologically consecutive. The measurement value acquirer 80 records, in the data storage unit 66, index measurement values that are chronologically consecutive throughout the entire process from the start to the end of running, as time-series data.

Some running courses, such as race courses, may be undulating, and external environmental factors, such as the season, weather, temperature, humidity, time of day, and number of participants, may greatly affect the index measurement values. Therefore, the measurement value acquirer 80 may acquire information regarding the course conditions and environmental conditions and, based on such information, normalize data such as not to be affected by these course conditions and environmental conditions. In this case, comparison target data, which will be described later, may also be normalized in the same way, so as to achieve comparison under equal conditions and also to improve the analysis accuracy.

The classification processing unit 85 classifies the index measurement values in multiple measurement sections for each type of motion analysis indices, using a predetermined classification method for classification by property. There are two classification methods. The first classification method is a method of classifying index measurement values based on a range obtained using an average value and the standard deviation of index measurement values for each type of motion analysis indices. The second classification method is a method of classifying index measurement values by cluster analysis for each type of motion analysis indices. With these classification methods, classification by the degree of approximation between index measurement values can be performed for each type of motion analysis indices.

In the first classification method, the classification processing unit 85 classifies index measurement values using an average value and the standard deviation. The classification processing unit 85 classifies the time-series data of index measurement values according to whether or not they are within the range of the average value ± standard deviation. This can distinguish the index measurement values between normal values and abnormal values, or between index measurement values indicating stable running forms and index measurement values indicating unstable running forms.

In the second classification method, the classification processing unit 85 classifies index measurement values by cluster analysis. As preparation processing for cluster analysis, the classification processing unit 85 calculates an average value and the standard deviation for each predetermined unit of the time-series data of index measurement values from the start point to the goal point. More specifically, a window for a section of a predetermined length from the start point is set in the time-series data of index measurement values, and, while sliding the window over the entire range to the goal point, window processing of calculating the average value and standard deviation of the index measurement values within the window is sequentially performed. By clustering the average values and standard deviation values thus calculated into a predetermined number of groups by cluster analysis, the index measurement values are classified into multiple groups, and group labels are labeled. The cluster analysis will be detailed later.

Whether the first classification method or the second classification method is used for classification may be different for each index measurement value, and which classification method is used for classification may be set in advance for each index measurement value. Alternatively, the classification processing unit 85 may perform classification processing using both the first and second classification methods for each index measurement value and determine which one to adopt based on the result of the processing. For example, when classification into an appropriate number cannot be achieved as a result of processing using one classification method, the other classification method may be adopted.

The mode determination unit 90 determines an output mode of a classified index measurement value based on comparison with a predetermined comparison target. The "output mode" as used herein means a mode of information output to the information terminal 50, including the type, display content, and display format of information to be displayed on the screen of the information terminal 50, and data content to be transmitted to the information terminal 50. The mode determination unit 90 determines the type of information to be output, comparison target for the information, the output format of the information, and the like, based on an instruction from the user 10 via input to the input/output unit 51 of the measurement device 20. The mode determination unit 90 includes an instruction acquirer 91, an output target determination unit 92, a comparison target setting unit 93, a comparison processing unit 94, a change condition setting unit 95, and a change detector 96.

The instruction acquirer 91 acquires an instruction from the user 10 via input to the input/output unit 51 of the measurement device 20. The instruction acquirer 91 may allow the user 10 to select an analysis viewpoint that the user 10 is interested in and may set an index measurement value corresponding to the analysis viewpoint thus selected, as the output target or comparison target. For example, as multiple types of analysis viewpoints to be selected by the user 10, seven types of analysis viewpoints may be prepared: "ground contact with less load", "stable posture", "whole body coordination centering on the pelvis", "smooth shift of the center of gravity", "strength of motion", "symmetry", and "race speed". These are analysis viewpoints that each individually affect one or more index measurement values.

The output target determination unit 92 sets, as an output target, an index measurement value corresponding to an analysis viewpoint selected by the user 10. For example, the index measurement values corresponding to the analysis viewpoint of "ground contact with less load" are those of the vertical motion (%height), landing impact, and kicking acceleration. The index measurement values corresponding to the analysis viewpoint of "stable posture" are those of the pelvic drop and pelvic backward lean. The index measurement values corresponding to the analysis viewpoint of "whole body coordination centering on the pelvis" are those of the kicking phase duration, pelvic rotation timing, and body drop. The index measurement values corresponding to the analysis viewpoint of "smooth shift of the center of gravity" are those of the amount of braking and horizontal impact force. The index measurement values corresponding to the analysis viewpoint of "strength of motion" are those of the stride length (%height), pelvic rotation, and pelvic elevation. To the analysis viewpoint of "symmetry", all of the index measurement values correspond. The index measurement values corresponding to the analysis viewpoint of "race speed" are those of the running speed.

If there is no particular instruction from the user 10, the output target determination unit 92 may set all the index measurement values as the output targets. Also, the output target determination unit 92 may set all the measurement sections as the output targets for one index measurement value. Also, when the instruction acquirer 91 acquires a selection instruction for a measurement section that the user 10 is interested in, the output target determination unit 92 may narrow the output target down to the specific measurement section based on the instruction from the user 10. Also, the output target determination unit 92 may narrow the output target down to a measurement section in which abnormality has been particularly observed or a measurement section in which a particularly excellent result has been shown, detected by the change detector 96 described later.

An output data generating unit 98 generates output data that includes an index measurement value set as an output target by the output target determination unit 92. The output data includes at least the contents to be displayed on the screen by the input/output unit 51 of the measurement device 20.

The mode determination unit 90 may output an index measurement value in different output modes, depending on what value is used as the comparison target. The comparison target setting unit 93 sets some reference value as the comparison target. The comparison target setting unit 93 may provide setting such as to compare average values for each group label classified by the classification processing unit 85, for example. The comparison target setting unit 93 may set, as the comparison target, an average value in the time-series data of index measurement values or an average value in a range narrowed down to a predetermined measurement section or may set the same type of index measurement value in another measurement section as the comparison target, for example. If an index measurement value is for one of the left and right legs, the comparison target setting unit 93 may set the index measurement value of the other leg as the comparison target. Also, the comparison target setting unit 93 may set the same type of index measurement value at another date and time or of another user, as the comparison target.

The comparison processing unit 94 compares an index measurement value as an output target with the comparison target set by the comparison target setting unit 93. For example, when an average value of each group label classified by the classification processing unit 85 is set as the comparison target, the comparison processing unit 94 compares average values of the respective group labels. Based on the comparison results from the comparison processing unit 94, an evaluation determination unit 97 evaluates each group of index measurement values classified by the classification processing unit 85. With regard to an index measurement value set as an output target by the output target determination unit 92, the evaluation determination unit 97 determines an evaluation for the index measurement value based on the comparison result from the comparison processing unit 94 and also on the detection result from the change detector 96.

The change detector 96 detects a change that meets a predetermined change condition, in the time-series data of index measurement values as output targets. The change condition setting unit 95 sets the change condition to be detected by the change detector 96. The change condition setting unit 95 may set, as the change condition, a specific change condition as a standard detection condition or may set a condition specified by the user 10 as the change condition. The change condition may be, for example, a condition set to detect, when the difference between a predetermined reference value and an index measurement value exceeds a predetermined range, the index measurement value as an attention value. For example, when an index measurement value is significantly better or significantly worse than a reference value, the index measurement value may be detected as an attention value. The reference value as the comparison target may be a comparison target set by the comparison target setting unit 93.

With regard to an index measurement value set as an output target mainly by the output target determination unit 92, the evaluation determination unit 97 determines an evaluation for the index measurement value based on the comparison result from the comparison processing unit 94 and the detection result from the change detector 96.

The output data generating unit 98 generates output data such that a measurement section of an index measurement value in which a change has been detected by the change detector 96 is distinguished from other index measurement values, i.e., measurement sections in which no change has been detected. Also, the output data generating unit 98 generates output data such that a motion analysis index of an index measurement value in which a change has been detected by the change detector 96 is distinguished from other motion analysis indices, i.e., index measurement values of motion analysis indices in which a similar change has not been detected. When the evaluation determination unit 97 has determined an evaluation, the output data generating unit 98 generates output data that includes the evaluation result.

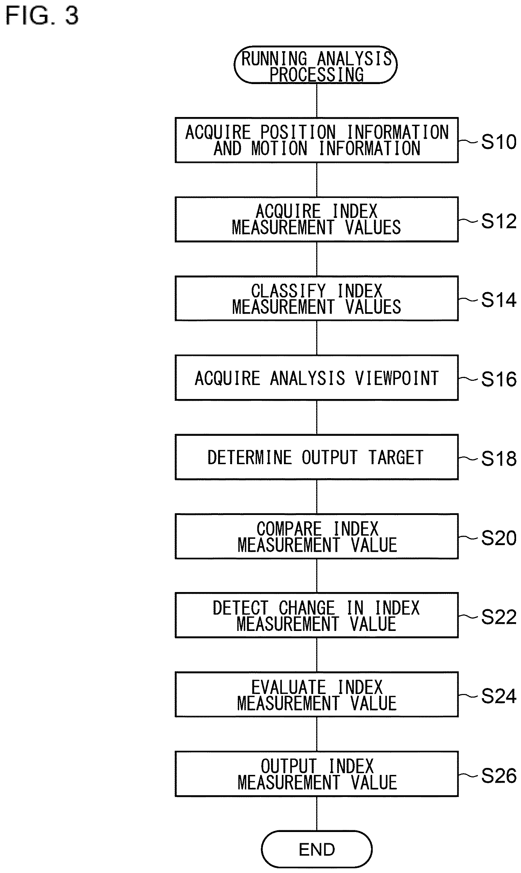

FIG. 3 is a flowchart that shows the process of processing performed in the running analysis system. The information acquirer 70 acquires position information and motion information measured by the user 10 using the measurement device 20 during running in a race or the like (S10). Based on the position information and motion information thus acquired, the measurement value acquirer 80 acquires measurement values of various motion analysis indices (S12). The classification processing unit 85 classifies the index measurement values corresponding to various motion analysis indices, using a predetermined classification method (S14). When there has been input of an analysis viewpoint through an operation by the user 10, the instruction acquirer 91 acquires information on the analysis viewpoint (S16), and the output target determination unit 92 determines an index measurement value as an output target based on the analysis viewpoint (S18). The change detector 96 detects a motion analysis index that meets a predetermined change condition or an index measurement value of the motion analysis index (S22), and the evaluation determination unit 97 determines the evaluation of the index measurement value (S24). The output data generating unit 98 generates output data including the index measurement value as the output target together with the comparison result, detection result, and evaluation. Based on the output data generated by the output data generating unit 98, the output unit 99 outputs the index measurement value (S26). The processes from S12 to S26 may be performed in various orders, and the order of S12 to S26 in the flowchart of FIG. 3 is merely an order determined for convenience.

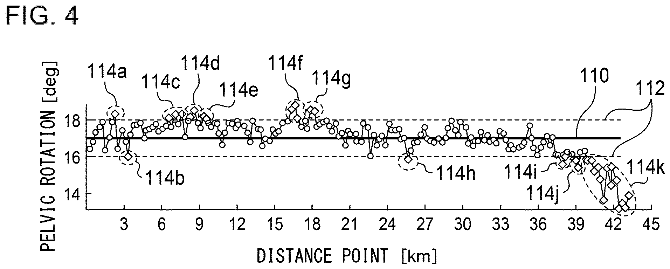

FIG. 4 shows an example in which index measurement values are classified using the first classification method. In the first classification method, the classification processing unit 85 classifies index measurement values using an average value and the standard deviation. In the graph of FIG. 4, as the index measurement values to be classified, the time-series data of index measurement values indicating the pelvic rotation are plotted with respect to the running distance point. The vertical axis represents the pelvic rotation [deg], and the horizontal axis represents the distance point [km]. A solid line 110 indicates an average value of the time-series data of the pelvic rotation, and dotted lines 112 indicate a range of the average value ± standard deviation of the time-series data of the pelvic rotational speed. The index measurement values within the range between the two dotted lines 112 are plotted with circles, and the index measurement values outside the range between the dotted lines 112 are plotted with diamonds. In the example of FIG. 4, the diamond plots in plot groups 114a-114k are the index measurement values outside the range between the dotted lines 112 and classified to be distinguished from the index measurement values of the circle plots located within the range between the dotted lines 112. The index measurement values indicated by the circle plots are classified as index values indicating stable running forms within the standard deviation, and the index measurement values indicated by the diamond plots are classified as index values indicating unstable or disordered running forms outside the standard deviation.

Thus, by classifying the time-series data of index measurement values according to whether or not they are within the range of the average value ± standard deviation, it is possible to distinguish between the index measurement values indicating stable running forms and the index measurement values indicating unstable running forms.

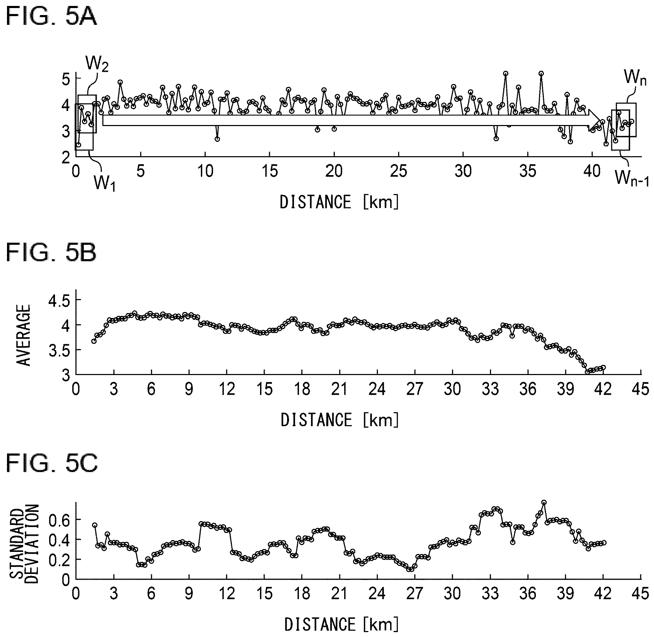

FIGS. 5 show preparation processing when index measurement values are classified using the second classification method. In the second classification method, the classification processing unit 85 classifies index measurement values by cluster analysis. In the graphs of FIGS. 5, as the index measurement values to be classified, the time-series data of index measurement values indicating the running pace are plotted with respect to the running distance point. The vertical axis represents the running pace [min/km], and the horizontal axis represents the distance point [km]. In FIG. 5A, the index measurement values are plotted as they are. As the preparation processing, a window W for a section of a predetermined length is set as illustrated, and, while sliding the window W from the start point to the goal point, the window processing of calculating the average value and standard deviation of the index measurement values included in the window W is performed. The window W covers a section that can include multiple, such as five, index measurement values that are chronologically consecutive. If an index measurement value is measured every 100 m distance, a window for a 500 m section will be set. Also, if an index measurement value is measured per unit time, such as every 10 seconds, a time window for a section of 60 seconds, for example, may be set.

A first window W₁ covers the first through fifth index measurement values, and a second window W₂ covers the second through sixth index measurement values; in this way, the windows are set to be slid by one index measurement value. The window is slid toward the goal point and, when the window is slid from the n-1th window Wₙ₋₁ to reach the last nth window Wₙ, the window processing is terminated. In FIG. 5B, the time-series data of the average values of the index measurement values within the respective windows calculated in the window processing are plotted with respect to the running distance point of each window. In FIG. 5C, the time-series data of the standard deviations of the index measurement values within the respective windows calculated in the window processing are plotted with respect to the running distance point of each window.

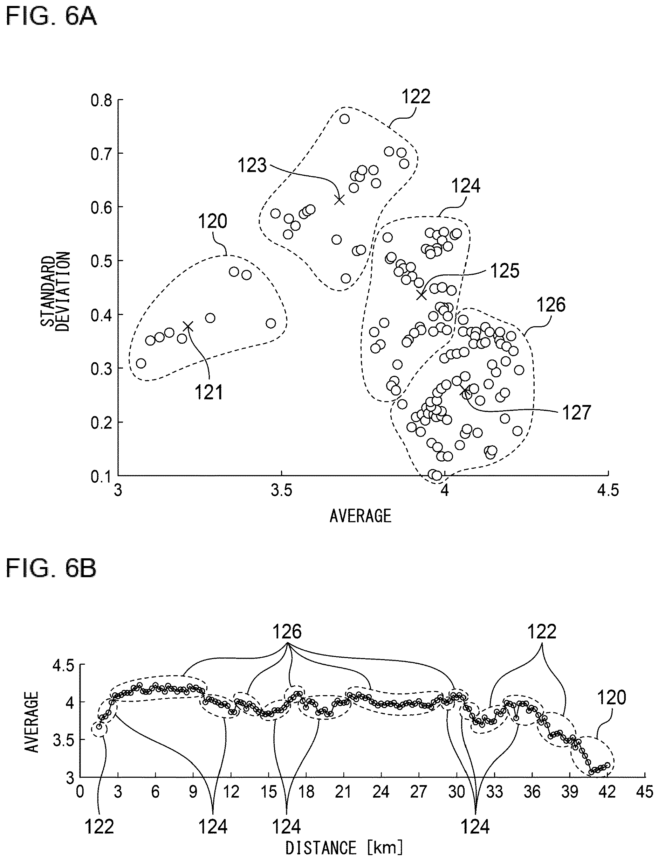

FIGS. 6 show processing for classifying index measurement values using the second classification method. The graph of FIG. 6A is a scatter plot, with the average values of FIG. 5B plotted on the horizontal axis and the standard deviations of FIG. 5C plotted on the vertical axis, in which the average values and the standard deviations have been calculated for the respective windows shown in FIGS. 5. All the plots are clustered using the K-means method, for example. The number of clusters, K, may be set to an estimated value obtained with the elbow method or, in the case where uniform division into four levels regardless of the type of the running evaluation value is desired, for example, may be set to a fixed value such as "4". As illustrated, all the plots are clustered based on the distance from each of K centroids and classified into a first group 120 with a centroid 121 as the core, a second group 122 with a centroid 123 as the core, a third group 124 with a centroid 125 as the core, and a fourth group 126 with a centroid 127 as the core. Each plot is labeled with a group label in which the plot is classified. The graph of FIG. 6B shows the average values in FIG. 5B. Each plot is classified in one of the first group 120, second group 122, third group 124, and fourth group 126, which are group labels labeled in FIG. 6A. The number of clusters may differ depending on the index measurement values or may differ depending on the variation of the index measurement values for each user 10 or in each run.

Thus, by classifying the time-series data of index measurement values by cluster analysis, classification by the degree of approximation of properties between the index measurement values can be performed, and variations in the index measurement values can be objectively grasped and detected.

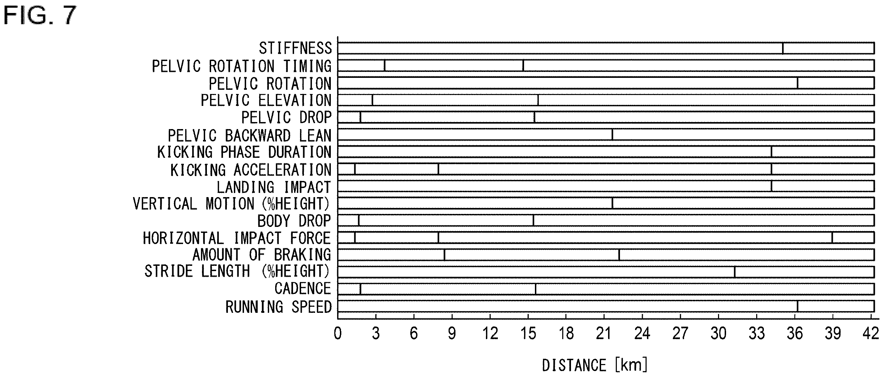

FIG. 7 shows horizontal bar graphs that each show proportion of classifications for each motion analysis index. For each motion analysis index, the index measurement values thereof are classified using the aforementioned first or second classification method, and the time-series data is divided at a change point of the classification. The index measurement values are arranged along the vertical axis, and the horizontal axis represents the running distance point [km]. In the case of a marathon, the total is defined as 42 km, and the horizontal bar graph of the index measurement values of each motion analysis index is divided in the proportion of classifications. For example, in the case of the motion analysis index "stiffness", the graph is divided into two classifications at the boundary around 34.5 km. In the case of the motion analysis index "pelvic rotation timing", the graph is divided into three classifications at the boundaries around 4 km and 14.5 km. For example, in the case of a motion analysis index classified using the first classification method, the time-series data of the index measurement values are divided at a boundary based on whether the index measurement value is within or outside the range of the standard deviation. In the case of a motion analysis index classified using the second classification method, the time-series data of the index measurement values are divided at a boundary of a change point between group labels.

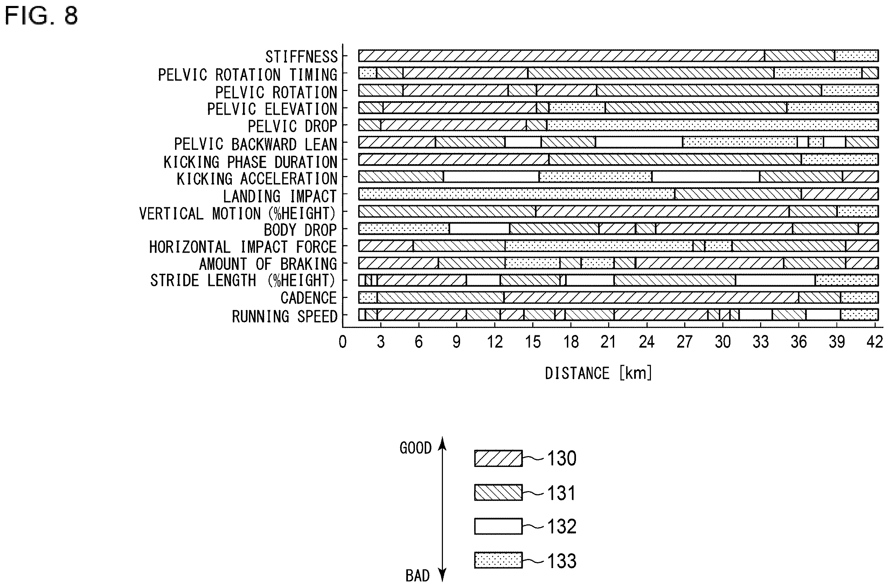

FIG. 8 shows a state where the index measurement values divided in the horizontal bar graphs of FIG. 7 are further evaluated based on a different criterion. The comparison processing unit 94 evaluates the classifications of each motion analysis index, using a comparison target set by the comparison target setting unit 93 as a reference value. For example, when an average value of each group label classified by the classification processing unit 85 is set as the comparison target, the comparison processing unit 94 compares average values of the respective group labels. Based on the comparison results from the comparison processing unit 94, the evaluation determination unit 97 evaluates each group of index measurement values classified by the classification processing unit 85 and displays the groups in the order of the average values of the respective groups in different colors such that one group is distinguished from the other groups, as shown in FIG. 8. A first color 130 indicates a classification of the best values (shown in blue, for example). A second color 131 indicates a classification of slightly better values (shown in green, for example). A third color 132 indicates a classification of slightly worse values (shown in yellow, for example). A fourth color 133 indicates a classification of the worst values (shown in red, for example). As a modification, the comparison processing unit 94 may calculate an average value of the index measurement values for the entire race, perform comparison with the average value of the entire race for each group label, and display the comparison results in different colors to be distinguished from each other.

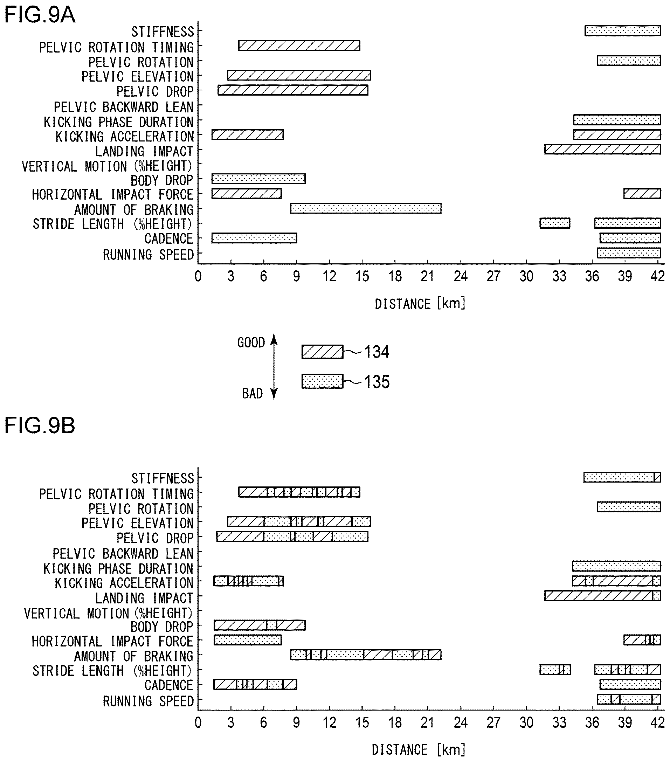

FIGS. 9 each show an example in which the output targets displayed are narrowed down to index measurement values detected as attention values. In FIGS. 9A and 9B, as the comparison results from the comparison processing unit 94, merely a classification significantly better than a predetermined reference value as the comparison target and a classification significantly worse than the predetermined reference value are displayed. The significantly better classification is displayed in a fifth color 134 (such as red), and the significantly worse classification is displayed in a sixth color 135 (such as blue). The comparison target in FIG. 9A is, for example, the data of the user 10 himself or herself, or the data of another runner. The comparison target may be set from among the index measurement values of the same runner in the same race, from among the index measurement values of the same runner in a past race, or from among the index measurement values of another runner. When an index measurement value of another runner is set as the comparison target, an index measurement value of another runner in the same measurement section may be set as the comparison target. The comparison target in FIG. 9B may be, for example, the value of the previous window for each window in FIG. 5A, or the value of the previous lap for each lap.

The change detector 96 detects a motion analysis index that has the longest section as a section in which a significantly good trend continues (the "pelvic drop" in the example of FIG. 9A) and a motion analysis index that has the longest section as a section in which a significantly bad trend continues (the "amount of braking" in the example of FIG. 9A).

The change detector 96 may detect a combination of multiple motion analysis indices that each has the longest section as a section in which a significantly good trend continues or a combination of multiple motion analysis indices that each has the longest section as a section in which a significantly bad trend continues. For example, the change detector 96 detects a combination of the landing impact and kicking acceleration (grand contact with less strain), and horizontal impact force (smooth shift of the center of gravity), as a combination of motion analysis indices that each has the longest section as a section in which a significantly good trend continues, at the end of the race. In this case, the evaluation determination unit 97 may determine as an evaluation result the advice that the user is successfully running while exerting the force without waste. The change detector 96 also detects a combination of the pelvic rotation (strength of motion) and kicking phase duration (whole body coordination centering on the pelvis), as a combination of motion analysis indices that each has the longest section as a section in which a significantly bad trend continues, at the end of the race. In this case, the evaluation determination unit 97 may determine as an evaluation result the advice that the user should run with smaller kicking motion and with the legs forward using the pelvis.

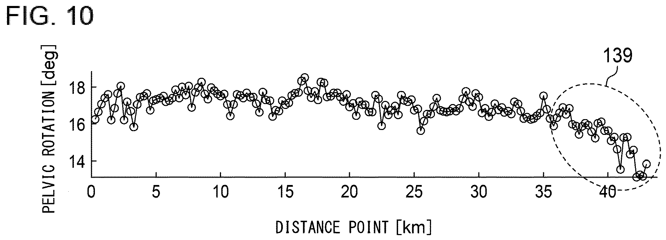

FIG. 10 shows an example of a motion analysis index that has the longest section as a section in which a significantly bad trend continues. FIG. 10 is a graph of the pelvic rotation that has the longest section as a section in which a significantly bad trend continues, at the end of the race. As the index measurement values, the time-series data of index measurement values indicating the pelvic rotation are plotted with respect to the running distance point. The vertical axis represents the pelvic rotation [deg], and the horizontal axis represents the distance point [km]. In particular, a significantly bad trend of the pelvic rotation of the user 10 continues in a section 139 at the end of the race, which is detected by the change detector 96 as an important change. The user 10 himself or herself may be often sensuously aware of the occurrence of such an important change during a race but may be unable to recognize at what stage the change actually started as a sign. According to the present embodiment, an important change in objective data can be detected, and the timing at which the change started can also be detected as a sign, which is useful data for improving the level of the user 10.

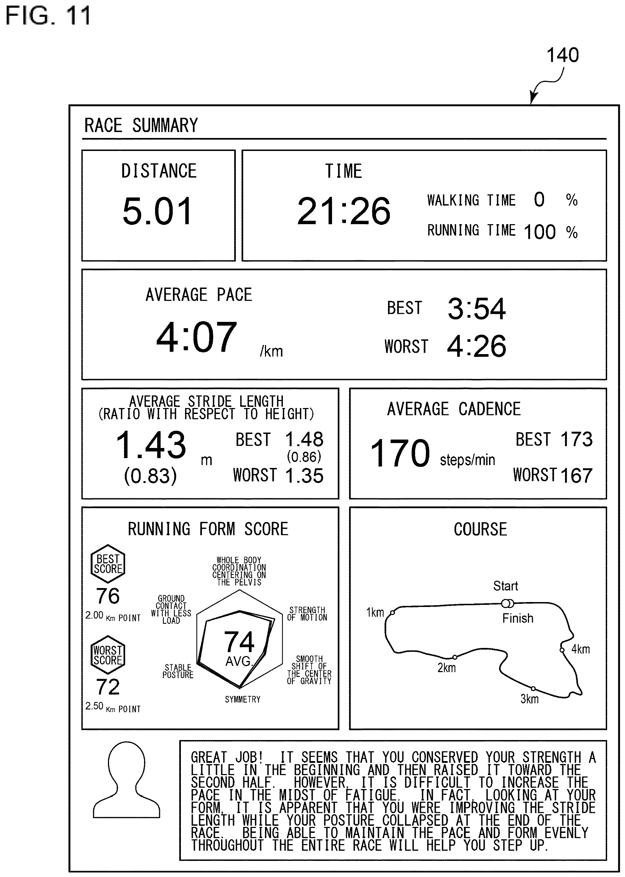

FIG. 11 illustrates a screen example for displaying race results. When the user 10 provides an instruction to display a summary of race results, a race summary screen 140 generated by the mode determination unit 90 is displayed. On the race summary screen 140, in addition to information indicating the running state, such as the running distance, running time, average pace, average stride length, and average cadence, a score based on the measurement values of various motion analysis indices is displayed as a running form score in a radar chart format. Also, course information based on the position information during the run is displayed. In the bottom column, the evaluation content including advice for the user 10 is displayed.

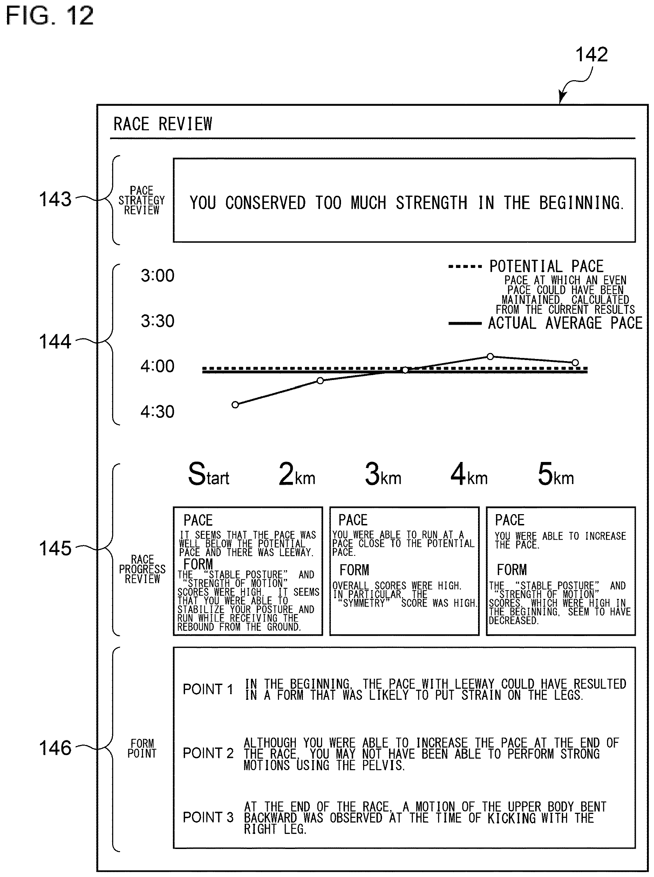

FIG. 12 illustrates a screen example for displaying race evaluations. When the user 10 provides an instruction to display race evaluations, a race review screen 142 generated by the mode determination unit 90 is displayed. On the race review screen 142, in a first column 143, an evaluation regarding the running pace is displayed. In a second column 144, a graph that shows the change over time of the running pace is displayed. In a third column 145, evaluations regarding the pace and the form are displayed for each of the beginning, middle, and end stages of the race.

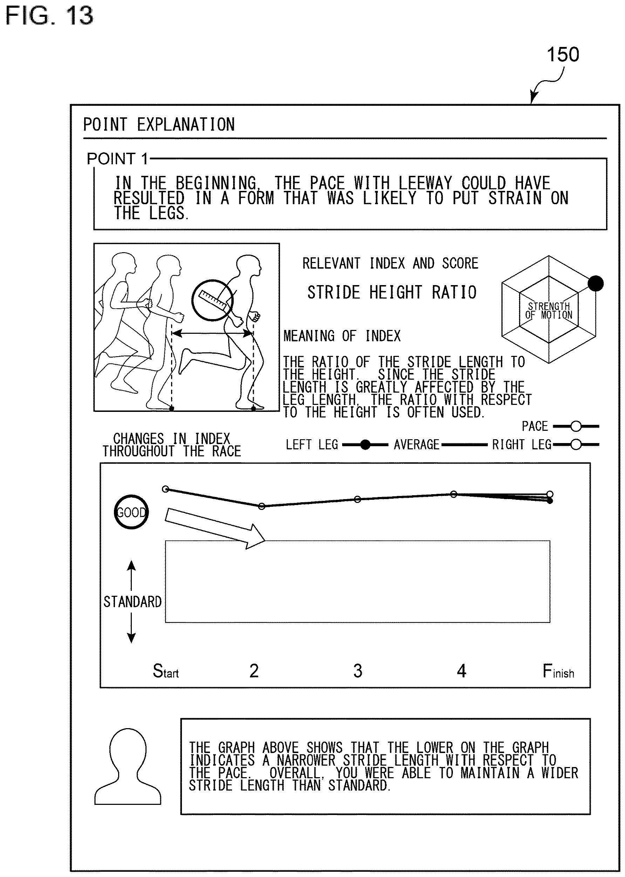

In a fourth column 146, an evaluation based on an important change detected by the change detector 96 and an evaluation regarding a motion analysis index corresponding to a viewpoint selected by the user 10 are displayed. In the fourth column 146, multiple evaluation points determined by the evaluation determination unit 97 are displayed, and, according to an instruction from the user 10, the screen is switched to a screen as shown in FIG. 13 in which detailed explanation or a graph for each evaluation point is displayed.

FIG. 13 illustrates a screen example for displaying detailed explanation regarding an evaluation point. When the user 10 provides an instruction to display detailed explanation for an evaluation point, a point explanation screen 150 generated by the mode determination unit 90 is displayed. On the point explanation screen 150, explanation of a motion analysis index itself, explanation of an important change when it is detected, explanation of the result of comparison with a predetermined comparison target, and the like are displayed with text and a graph.

## Claims

1. A running analysis system (100), comprising:
an information acquirer (70) configured to acquire position information and motion information of a user (10) as a runner, measured at each point of passage in a run by a predetermined measurement device (12, 14, 16);
a measurement value acquirer (80) configured to acquire measurement values of a plurality of types of motion analysis indices indicating a running motion state of the user (10) for each predetermined unit measurement section, based on the position information and the motion information chronologically consecutive;
a classification processing unit (85) configured to classify the measurement values in a plurality of measurement sections for each type of the motion analysis indices, using a predetermined classification method for classification by property;
a mode determination unit (90) configured to determine an output mode of the classified measurement values based on comparison with a predetermined comparison target; and
an output unit that is capable of outputting at least information regarding the classified measurement values, based on the determined output mode,
wherein the mode determination unit (90) includes a change detector (96) configured to detect a change that meets a predetermined change condition in time-series data of the measurement values, and
the output mode includes an evaluation based on the change detected by the change detector (96).

2. The running analysis system (100) according to claim 1,
wherein the classification processing unit (85) is configured to classify the measurement value using a predetermined classification method for performing classification by the degree of approximation between measurement values for each type of the motion analysis indices.

3. The running analysis system (100) according to claim 2,
wherein the classification processing unit (85) is configured to classify the measurement value based on a range obtained using an average value and the standard deviation of measurement values for each type of the motion analysis indices.

4. The running analysis system (100) according to claim 2,
wherein the classification processing unit (85) is configured to classify the measurement value by cluster analysis for each type of the motion analysis indices.

5. The running analysis system (100) according to any one of claims 1 through 4,
wherein the mode determination unit (90) is configured to determine the output mode such that the measurement value in which the change that meets the predetermined change condition has been detected is distinguished from other measurement values.

6. The running analysis system (100) according to any one of claims 1 through 4,
wherein the mode determination unit (90) is configured to determine the output mode such that the motion analysis index in which the change that meets the predetermined change condition has been detected is distinguished from other motion analysis indices.

7. The running analysis system (100) according to any one of claims 1 through 4,
wherein the mode determination unit (90) is configured to determine the output mode such that the measurement value in which the change that meets the change condition specified by the user (10) has been detected is distinguished from other measurement values.

8. The running analysis system (100) according to any one of claims 1 through 4,
wherein the mode determination unit (90) is configured to determine the output mode such that the measurement value in which the change that meets the predetermined change condition in the motion analysis index specified by the user (10) has been detected is distinguished from other measurement values.

9. The running analysis system (100) according to any one of claims 1 through 4,
wherein the mode determination unit (90) is configured to determine the output mode such that the measurement value in which the change that meets the predetermined change condition in the measurement section specified by the user (10) has been detected is distinguished from other measurement values.

10. The running analysis system (100) according to any one of claims 1 through 4,
wherein the mode determination unit (90) is configured to determine the output mode of the classified measurement values based on comparison with a comparison target specified by the user (10).

11. A running analysis method, comprising:
acquiring position information and motion information of a user (10) as a runner, measured at each point of passage in a run by a predetermined measurement device (12, 14, 16);
acquiring measurement values of a plurality of types of motion analysis indices indicating a running motion state of the user (10) for each predetermined unit measurement section, based on the position information and the motion information chronologically consecutive;
classifying measurement values in a plurality of measurement sections for each type of the motion analysis indices, using a predetermined classification method for classification by property;
determining an output mode of the classified measurement values based on comparison with a predetermined comparison target; and
outputting at least information regarding the classified measurement values, based on the determined output mode, wherein
the determining the output mode includes detecting a change that meets a predetermined change condition in time-series data of the measurement values, and
the output mode includes an evaluation based on the change.

## Patentansprüche

1. Laufanalysesystem (100), mit:
einem Informationserwerber (70), der dazu eingerichtet ist, um Standortinformationen und Bewegungsinformationen eines Benutzers (10) als ein Läufer zu erhalten, wobei diese bei jedem Durchlauf bei einem Lauf durch ein vorbestimmtes Messgerät (12, 14, 16) gemessen werden;
einem Messwerterwerber (80), der dazu eingerichtet ist, um Messwerte von einer Vielzahl von Arten von Bewegungsanalyseindices zu erwerben, die einen Laufbewegungszustand des Benutzers (10) für jeden vorbestimmten Einheitsmessabschnitt angibt, basierend auf den chronologisch fortlaufenden Standortinformationen und Bewegungsinformationen;
einer Klassifizierungsverarbeitungseinheit (85), die dazu eingerichtet ist, um die Messwerte in einer Vielzahl von Messabschnitten für jede Art der Bewegungsanalyseindices zu klassifizieren, unter Verwendung eines vorbestimmten Klassifizierungsverfahrens zum Klassifizieren durch Eigenschaft;
einer Betriebsartbestimmungseinheit (90), die dazu eingerichtet ist, um eine Ausgabebetriebsart der klassifizierten Messwerte basierend auf einem Vergleich mit einem vorbestimmten Vergleichsziel zu bestimmen; und
einer Ausgabeeinheit, die zur Ausgabe von zumindest Informationen bezüglich der klassifizierten Messwerte befähigt ist, basierend auf der bestimmten Ausgabebetriebsart,
wobei die Betriebsartbestimmungseinheit (90) einen Änderungsdetektor (96) beinhaltet, der dazu eingerichtet ist, um eine Änderung zu erfassen, die eine vorbestimmte Änderungsbedingung in Zeitreihendaten der Messwerte erfüllt, und
die Ausgabebetriebsart eine Bewertung basierend auf der durch den Änderungsdetektor (96) erfassten Änderung beinhaltet.

2. Laufanalysesystem (100) nach Anspruch 1,
wobei die Klassifizierungsverarbeitungseinheit (85) derart eingerichtet ist, den Messwert unter Verwendung eines vorbestimmten Klassifizierungsverfahrens zum Klassifizierungsdurchführen mit dem Maß von Approximation zwischen Messwerte für jede Art der Bewegungsanalyseindices zu klassifizieren.

3. Laufanalysesystem (100) nach Anspruch 2,
wobei die Klassifizierungsverarbeitungseinheit (85) derart eingerichtet ist, den Messwert basierend auf einem unter Verwendung eines Durchschnittswerts und der Standardabweichung von Messwerte für jede Art von den Bewegungsanalyseindices erhalten Bereich zu klassifizieren.

4. Laufanalysesystem (100) nach Anspruch 2,
wobei die Klassifizierungsverarbeitungseinheit (85) derart eingerichtet ist, den Messwert durch Klassifizierungsanalysis für jede Art der den Bewegungsanalyseindices zu klassifizieren.

5. Laufanalysesystem (100) nach einem der Ansprüche 1 bis 4,
wobei die Betriebsartbestimmungseinheit (90) derart eingerichtet ist, den Ausgabebetriebsart zu bestimmen, so dass der Messwert von andere Messwerts unterschieden wurde, wobei die Änderung, die die vorbestimmte Änderungsbedingung erfüllt, erfasst worden ist.

6. Laufanalysesystem (100) nach einem der Ansprüche 1 bis 4,
wobei die Betriebsartbestimmungseinheit (90) derart eingerichtet ist, den Ausgabebetriebsart zu bestimmen, so dass der Bewegungsanalyseindices von anderen Bewegungsanalyseindices unterschieden wurde, wobei die Änderung, die die vorbestimmte Änderungsbedingung erfüllt, erfasst worden ist.

7. Laufanalysesystem (100) nach einem der Ansprüche 1 bis 4,
wobei die Betriebsartbestimmungseinheit (90) derart eingerichtet ist, den Ausgabebetriebsart zu bestimmen, so dass der Messwert von andere Messwerts unterschieden wurde, wobei die Änderung, die die von dem Benutzer (10) bestimmte Änderungsbedingung erfüllt, erfassen worden ist.

8. Laufanalysesystem (100) nach einem der Ansprüche 1 bis 4,
wobei die Betriebsartbestimmungseinheit (90) derart eingerichtet ist, den Ausgabebetriebsart zu bestimmen, so dass der Messwert von andere Messwerts unterschied wurde, wobei die Änderung, die die vorbestimmte Änderungsbedingung in dem von dem Benutzer (10) bestimmte Bewegungsanalyseindices erfüllt, erfassen worden ist.

9. Laufanalysesystem (100) nach einem der Ansprüche 1 bis 4,
wobei die Betriebsartbestimmungseinheit (90) derart eingerichtet ist, den Ausgabebetriebsart zu bestimmen, so dass der Messwert von andere Messwerts unterschied wurde, wobei die Änderung, die die vorbestimmte Änderungsbedingung in dem von dem Benutzer (10) bestimmte Messungsabschnitt erfüllt, erfassen worden ist.

10. Laufanalysesystem (100) nach einem der Ansprüche 1 bis 4,
wobei die Betriebsartbestimmungseinheit (90) derart eingerichtet ist, den Ausgabebetriebsart der eingruppierten Messwerte basierend auf Vergleich mit einem von dem Benutzer (10) spezifizierten Vergleichsziel zu bestimmen.

11. Laufanalyseverfahren, mit:
Erhalten von Standortinformationen und Bewegungsinformationen eines Benutzers (10) als einer Läufer, wobei diese bei jedem Durchlauf bei einem Lauf durch einen vorbestimmten Messgeräte (12, 14, 16) gemessen werden;
Erwerben von Messwerte von einer Vielzahl von Arten von Bewegungsanalyseindices, die einen Laufbewegungszustand des Benutzers (10) für jeden vorbestimmten Einheitsmessabschnitt angibt, basierend auf den chronologisch fortlaufenden Standortinformationen und Bewegungsinformationen;
Klassifizieren von Messwerte in einer Vielzahl von Messabschnitten für jede Art der Bewegungsanalyseindices, unter Verwendung eines vorbestimmten Klassifizierungsverfahrens zum Klassifizierung mit Eigenschaft;
Bestimmen einem Ausgabebetriebsart der klassifizierten Messwerte basierend auf einem Vergleich mit einem vorbestimmten Vergleichsziel; und
Ausgebe vor zumindest Informationen bezüglich der klassifizierten Messwerte, basierend auf der bestimmten Ausgabebetriebsart, wobei
das Bestimmen einem Ausgabebetrieb Erfassen einer Änderung beinhaltet, die eine vorbestimmte Änderungsbedingung in Zeitreihendaten der Messwerte erfüllt, und
der Ausgabebetriebsart eine Bewertung basierend auf der Änderung beinhaltet.

## Revendications

1. Système d'analyse de course (100), comprenant :
un dispositif d'acquisition d'informations (70) configuré pour acquérir des informations de position et des informations de mouvement d'un utilisateur (10) en tant que coureur, mesurées à chaque point de passage dans une course par un dispositif de mesure prédéterminé (12, 14, 16) ;
un dispositif d'acquisition de valeurs de mesure (80) configuré pour acquérir des valeurs de mesure d'une pluralité de types d'indices d'analyse de mouvement indiquant un état de mouvement de course de l'utilisateur (10) pour chaque section de mesure unitaire prédéterminée,
sur la base des informations de position et des informations de mouvement chronologiquement consécutives ;
une unité de traitement de classification (85) configurée pour classer les valeurs de mesure dans une pluralité de sections de mesure pour chaque type des indices d'analyse de mouvement, en utilisant un procédé de classification prédéterminé pour la classification par propriété ;
une unité de détermination de mode (90) configurée pour déterminer un mode de sortie des valeurs de mesure classées sur la base d'une comparaison avec une cible de comparaison prédéterminée ; et
une unité d'émission capable d'émettre au moins des informations concernant les valeurs de mesure classées, sur la base du mode de sortie déterminé,
l'unité de détermination de mode (90) comprenant un détecteur de changement (96) configuré pour détecter un changement qui répond à une condition de changement prédéterminée dans des données de séries temporelles des valeurs de mesure, et
le mode de sortie comprenant une évaluation basée sur le changement détecté par le détecteur de changement (96).

2. Système d'analyse de course (100) selon la revendication 1,
l'unité de traitement de classification (85) étant configurée pour classer la valeur de mesure en utilisant un procédé de classification prédéterminé pour effectuer une classification par le degré d'approximation entre les valeurs de mesure pour chaque type des indices d'analyse de mouvement.

3. Système d'analyse de course (100) selon la revendication 2,
l'unité de traitement de classification (85) étant configurée pour classer la valeur de mesure sur la base d'une plage obtenue en utilisant une valeur moyenne et l'écart type de valeurs de mesure pour chaque type des indices d'analyse de mouvement.

4. Système d'analyse de course (100) selon la revendication 2,
l'unité de traitement de classification (85) étant configurée pour classer la valeur de mesure par analyse de grappes pour chaque type des indices d'analyse de mouvement.

5. Système d'analyse de course (100) selon l'une quelconque des revendications 1 à 4, l'unité de détermination de mode (90) étant configurée pour déterminer le mode de sortie de sorte que la valeur de mesure dans laquelle le changement qui répond à la condition de changement prédéterminée a été détecté soit distinguée des autres valeurs de mesure.

6. Système d'analyse de course (100) selon l'une quelconque des revendications 1 à 4, l'unité de détermination de mode (90) étant configurée pour déterminer le mode de sortie de sorte que l'indice d'analyse de mouvement dans lequel le changement qui répond à la condition de changement prédéterminée a été détecté soit distingué des autres indices d'analyse de mouvement.

7. Système d'analyse de course (100) selon l'une quelconque des revendications 1 à 4, l'unité de détermination de mode (90) étant configurée pour déterminer le mode de sortie de sorte que la valeur de mesure dans laquelle le changement qui répond à la condition de changement spécifiée par l'utilisateur (10) a été détecté soit distinguée des autres valeurs de mesure.

8. Système d'analyse de course (100) selon l'une quelconque des revendications 1 à 4, l'unité de détermination de mode (90) étant configurée pour déterminer le mode de sortie de sorte que la valeur de mesure dans laquelle le changement qui répond à la condition de changement prédéterminée dans l'indice d'analyse de mouvement spécifié par l'utilisateur (10) a été détecté soit distinguée des autres valeurs de mesure.

9. Système d'analyse de course (100) selon l'une quelconque des revendications 1 à 4, l'unité de détermination de mode (90) étant configurée pour déterminer le mode de sortie de sorte que la valeur de mesure dans laquelle le changement qui remplit la condition de changement prédéterminée dans la section de mesure spécifiée par l'utilisateur (10) a été détecté soit distinguée des autres valeurs de mesure.

10. Système d'analyse de course (100) selon l'une quelconque des revendications 1 à 4, l'unité de détermination de mode (90) étant configurée pour déterminer le mode de sortie des valeurs de mesure classées sur la base d'une comparaison avec une cible de comparaison spécifiée par l'utilisateur (10).

11. Procédé d'analyse de course, comprenant :
l'acquisition d'informations de position et d'informations de mouvement d'un utilisateur (10) en tant que coureur, mesurées à chaque point de passage dans une course par un dispositif de mesure prédéterminé (12, 14, 16) ;
l'acquisition de valeurs de mesure d'une pluralité de types d'indices d'analyse de mouvement indiquant un état de mouvement de course de l'utilisateur (10) pour chaque section de mesure unitaire prédéterminée, sur la base des informations de position et des informations de mouvement chronologiquement consécutives ;
le classement des valeurs de mesure dans une pluralité de sections de mesure pour chaque type des indices d'analyse de mouvement, à l'aide d'un procédé de classification prédéterminé pour la classification par propriété ;
la détermination d'un mode de sortie des valeurs de mesure classées sur la base d'une comparaison avec une cible de comparaison prédéterminée ; et
l'émission d'au moins des informations concernant les valeurs de mesure classées, sur la base du mode de sortie déterminé,
la détermination du mode de sortie comprenant la détection d'un changement qui répond à une condition de changement prédéterminée dans les données de séries temporelles des valeurs de mesure, et
le mode de sortie comprenant une évaluation basée sur le changement.
